## Europäisches Patentamt

(19) **European Patent Office**

**Office européen des brevets**

(11) Veröffentlichungsnummer: **0 257 350**
**B1**

(12) **EUROPÄISCHE PATENTSCHRIFT**

(45) Veröffentlichungstag der Patentschrift:
18.10.89

(51) Int. Cl.⁴: **B60J 5/06, E05F 11/44, E05F 1/16**

(21) Anmeldenummer: 87111128.2

(22) Anmeldetag: 31.07.87

E R R A T U M

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT :
SHOULD READ :
DEVRAIT ETRE LU :

| | | | | |
|---|---|---|---|---|
| Andere in den Fahrzeughaltern | 2 | 1 | 35 | Andere in den Fahrzeugkörper |
| Seitentür ist Einstiegöffnung vorhanden, | 2 | 1 | 47/48 | Seitentür ist eine Einstieg-öffnung vorhanden, |
| Die Gewichtsausglichsfeder | 4 | 5 | 27 | Die Gewichtausgleichsfeder |
| ist mit der Schwenkachse | 4 | 6 | 10 | ist, mit der Schwenkachse |
| Schiebetür für Kraftfahrzeuge, insbesondere Personenkraft-wagen, mit einem Korpus, | 5 | 7 | 3/4 | Als Schiebetür ausgebildete Seitentür für Personenkraft-wagen mit einem Korpus, |
| (3) in der Versenkstellung eine im wesentlichen | 5 | 7 | 11 | (3) in den zugeörigen seit-lichen Längsträger (1) ver-senkbar ist und in der Versenk-stellung eine im wesentlichen |
| 2. Schiebetür nach Anspruch 1 | 5 | 7 | 13 | 2. Seitentür nach Anspruch 1 |
| 3. Schiebetür nach Anspruch 1 | 5 | 7 | 25 | 3. Seitentür nach Anspruch 1 |
| daß eine übertotpunktfeder | 5 | 8 | 49/50 | daß eine Übertotpunktfeder |

Tag der Entscheidung
über die Berichtigung )
Date of decision on
rectification: ) 15.2.90
Date de décision portant )
sur modification: )

Ausgabe- und Veröffentlichungstag: )
Issue and publication ) 18.4.90
date: )
Date d'edition et de )
publication: )

Patbl.Nr.)
90/16
EPB no:)
Bull. no:)

**Europäisches Patentamt**

**European Patent Office**

**Office européen des brevets**

(19)

(11) Veröffentlichungsnummer: **0 257 350**
**B1**

(12) **EUROPÄISCHE PATENTSCHRIFT**

(45) Veröffentlichungstag der Patentschrift:
**18.10.89**

(51) Int. Cl.⁴: **B60J 5/06**, E05F 11/44,
E05F 1/16

(21) Anmeldenummer: **87111128.2**

(22) Anmeldetag: **31.07.87**

(54) **Als Schiebetür ausgebildete Seitentür für Personenkraftwagen.**

(30) Priorität: **31.07.86 DE 3625936**

(43) Veröffentlichungstag der Anmeldung:
**02.03.88 Patentblatt 88/9**

(45) Bekanntmachung des Hinweises auf die Patenterteilung:
**18.10.89 Patentblatt 89/42**

(84) Benannte Vertragsstaaten:
**DE ES FR GB IT SE**

(56) Entgegenhaltungen:
**WO-A-87/01992**
**FR-A- 2 235 259**
**US-A- 1 193 707**
**US-A- 2 622 919**
**US-A- 4 034 509**

(73) Patentinhaber: **Bayerische Motoren Werke**
**Aktiengesellschaft, Patentabteilung**
**AJ-3 Postfach 40 02 40 Petuelring 130,**
**D-8000 München 40(DE)**

(72) Erfinder: **Gersmann, Klaus, Gundermannstrasse 47,**
**D-8000 München 45(DE)**

(74) Vertreter: **Draeger, Karlfried, Bayerische Motoren Werke**
**Aktiengesellschaft Postfach 40 02 40 Petuelring 130 -**
**AJ 36, D-8000 München 40(DE)**

## Beschreibung

Die Erfindung betrifft eine als Schiebetür ausgebildete Seitentür für Personenkraftwagen nach dem Oberbegriff des Patentanspruchs 1.

Bei einer aus der DE–C 895 409 bekannten Seitentür dieser Art kann nach Versenken der Fensterscheibe in den Türkorpus dieser mitsamt der Fensterscheibe in einen Aufnahmeraum unterhalb des neben der Seitentür angeordneten Fahrzeugsitzes versenkt werden. In der Versenkstellung nimmt der Türkorpus eine im wesentlichen waagerechte Lage ein. Zur Führung der Seitentür sind an dem Korpus an jedem Ende zwei federnd gelagerte Führungsrollen mit senkrecht auf der Türwandung stehenden Drehachsen vorgesehen, die über die Korpusenden hinausragen und in Führungsschienen an dem feststehenden Fahrzeugaufbau eingreifen. Für das Öffnen und Schließen der Seitentür ist ein elektromotorischer Antrieb vorgesehen. Es ist jedoch auch eine Notbetätigung mit der Hand möglich. Sowohl bei elektromotorischer Betätigung als auch bei einer Betätigung von Hand erfordert das Versenken des Korpusses stets ein vorhergehendes vollständiges Versenken der Fensterscheibe. Beim Schließen der Seitentür kann umgekehrt die Fensterscheibe erst aus ihrer Versenkstellung angehoben werden, nachdem der Korpus vollständig in seine Schließstellung bewegt worden ist. Für die Handbetätigung sind an dem oberen Rand der Fensterscheibe eine Handhabe und ein Klappgriff angeordnet. Die bekannte Anordnung ist aufwendig und von Hand nur umständlich zu betätigten.

Andere in den Fahrzeughaltern versenkbare Schiebetüren sind aus DE–B 2 018 319, FR–A 961 405 und US–A 2 651 541 bekannt.

Der Erfindung liegt die Aufgabe zugrunde, eine Seitentür der eingangs genannten Art zu schaffen, die verhältnismäßig wenig Aufwand erfordert und leicht und einfach zu betätigen ist.

Die Lösung dieser Aufgabe ist in dem kennzeichnenden Teil des Patentanspruchs 1 angegeben. Durch sie wird mit einfachen Mitteln erreicht, daß zur Aufnahme der Seitentür in der Versenkstellung der seitliche Fahrzeug-Längsträger (Türschweller) dienen kann. Bei geöffneter Seitentür ist Einstiegöffnung vorhanden, deren Höhe etwa zwei Drittel des Maßes von Schwellerunterkante bis Dachrahmen beträgt. Dies ist für sportliche Fahrzeuge ein akzeptabler Wert. Für Fahrzeuge mit offenem Aufbau ist die erfindungsgemäße Seitentür besonders vorteilhaft. Sie läßt sich nicht nur im geöffneten Zustand einfach unterbringen, sondern ermöglicht wegen der weitgehenden Beibehaltung ihrer senkrechten Anordnung ein einfaches und schnelles Öffnen und Schließen.

Ausgestaltungen der Erfindung sind in den Unteransprüchen gekennzeichnet. Vorteile, die mit ihnen verbunden sind, ergeben sich aus der nachfolgenden Beschreibung.

In der Zeichnung sind Ausführungsbeispiele der Erfindung schematisch dargestellt, und zwar zeigt

Fig. 1 eine erste Schiebetür sowohl in geschlossenem als auch in geöffnetem Zustand in Schrägansicht,

Fig. 2 die Schiebetür nach Fig. 1 in einem lotrechten Querschnitt,

Fig. 3 und Fig. 4 je einen waagerechten Querschnitt durch die Führungen der Schiebetür nach Fig. 1,

Fig. 5 eine zweite Schiebetür sowohl in geschlossenem als auch in geöffnetem Zustand in Schrägansicht,

Fig. 6 eine dritte Schiebetür in geschlossenem Zustand in Schrägansicht,

Fig. 7 die Schiebetür nach Fig. 6 sowohl in geschlossenem als auch in geöffnetem Zustand in Schrägansicht,

Fig. 8 eine vierte Schiebetür bei geöffnetem Fenster in Schrägansicht,

Fig. 9 die Schiebetür nach Fig. 8 in geöffnetem Zustand in Schrägansicht,

Fig. 10 eine fünfte Schiebetür sowohl in geschlossenem als auch in geöffnetem Zustand in Schrägansicht,

Fig. 11 eine sechste Schiebetür in geschlossenem Zustand in Schrägansicht und

Fig. 12 eine siebte Schiebetür in geschlossenem Zustand in Schrägansicht.

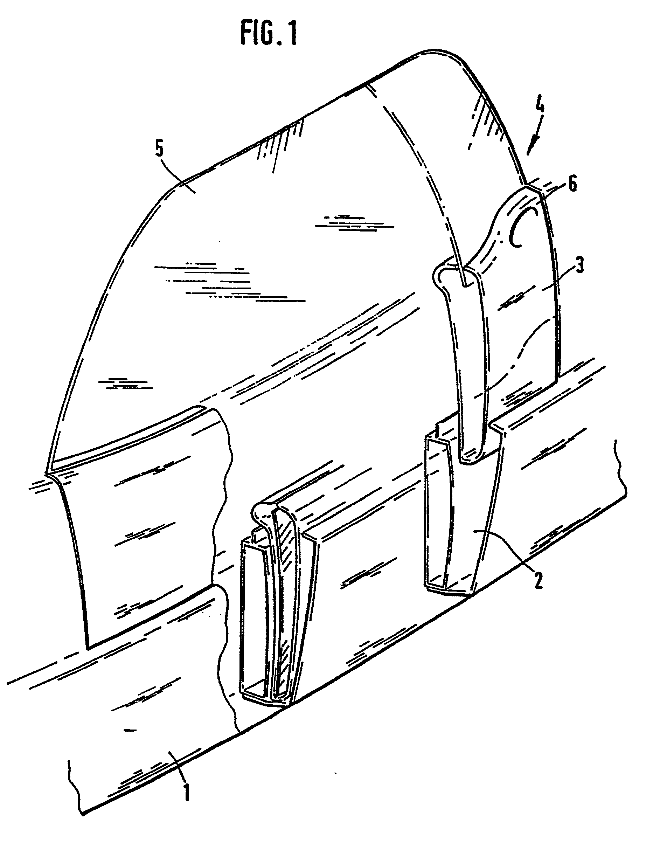

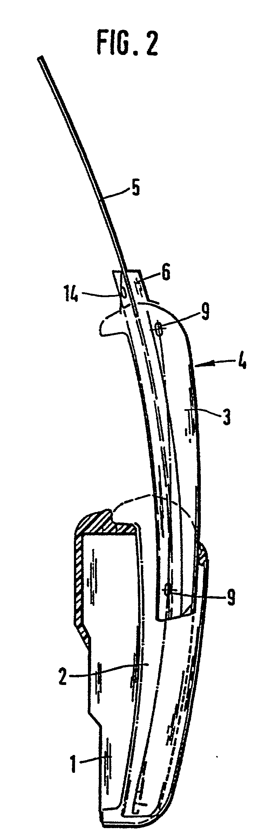

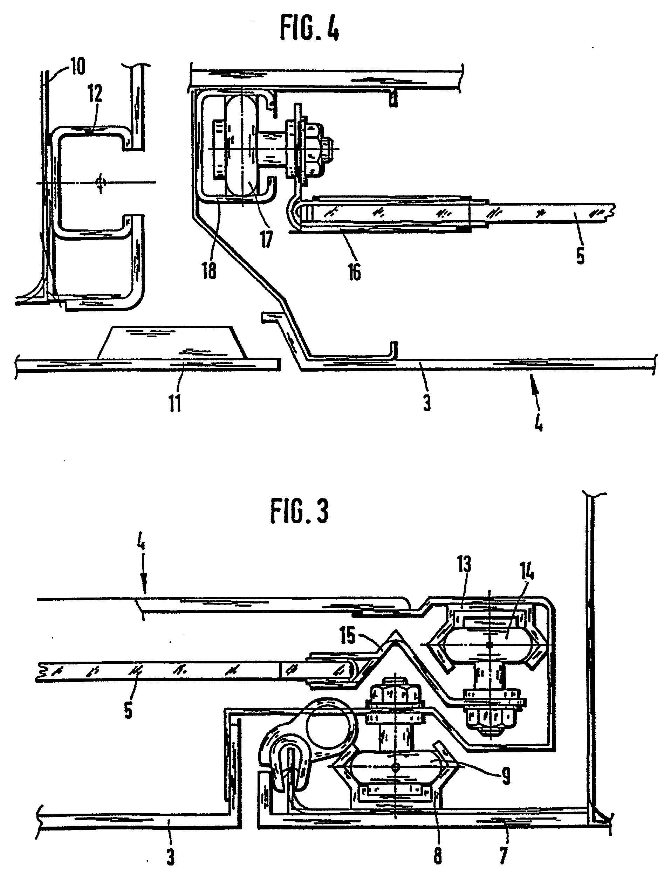

Bei dem Ausführungsbeispiel nach Fig. 1 bis 4 ist in dem linken Längsträger 1 (Türschweller) eines nicht weiter dargestellten sportlichen, zweisitzigen Personenkraftwagens mit offenem Aufbau ein nach oben offener Aufnahmeraum 2 vorgesehen. In diesen kann der Korpus 3 der oberhalb des Längsträgers 1 angeordneten als Seitentür ausgebildeten Schiebetür 4 im wesentlichen in senkrechter Stellung abgesenkt werden. Der Korpus 3 trägt eine Fensterscheibe 5, die in den Korpus 3 abgesenkt werden kann. Der Korpus 3 weist an seinem hinteren Ende am oberen Rand, der eine Brüstung bildet, einen Türgriff 6 auf, der dem Öffnen und Schließen der Schiebetür 4 dient.

Die Führung des Korpusses 3 und der Fensterscheibe 5 erfolgt über Rollen, die in Führungsschienen laufen. An der Innenseite der linken Fahrzeugseitenwand 7, die sich nach hinten an das hintere Ende der Schiebetür 4 anschließt, ist eine Führungsschiene 8 befestigt, die sich im wesentlichen in senkrechter Richtung erstreckt und Winkelflanken aufweist. Der Korpus 3 trägt mit lotrechtem Abstand voneinander an seinem oberen und unteren Ende jeweils eine Rolleneinheit, deren Rollen 9 in der Führungsschiene 8 laufen und von deren Winkelflanken geführt werden. An dieser Führung 8, 9 können somit sowohl Kräfte quer zur Fahrzeuglängsrichtung als auch in Fahrzeuglängsrichtung aufgenommen werden. Außerdem können Momente sowohl um eine sich in Fahrzeuglängsrichtung erstreckende Achse als auch um eine sich quer zur Fahrzeuglängsrichtung erstreckende Achse aufgenommen werden. An dem linken vorderen Karosseriepfosten 10 (A-Säule), neben dem die linke vordere Fahrzeugseitenwand 11 angeordnet ist, ist hingegen eine Führungsschiene 12 mit im wesentlichen U-förmigem Querschnitt vorgesehen, in die nicht dargestellte Führungsrollen einer vorderen Rolleneinheit des Korpusses 3 eingreifen. Die Rollen der vorderen Rolleneinheit laufen an den Innenseiten der U-Schenkel der Führungsschiene 12. Diese Führung ermöglicht einen Toleranzausgleich in Längsrichtung und läßt Winkelfehler zu. Sie nimmt demgemäß Kräfte quer zur Fahrzeuglängsrichtung auf. Die vordere Rolleneinheit ist etwa auf halber Höhe des Korpusses 3 angeordnet.

Für die Führung der Fensterscheibe 5 ist in dem Korpus 3 am hinteren Ende eine Führungsschiene 13 mit Winkelflanken angeordnet. In dieser laufen zwei mit senkrechtem Abstand voneinander angeordnete Führungsrollen 14, die an einer Rollenhalterung 15 der Fensterscheibe 5 gelagert sind. Die Rollenhalterung 15 ist am unteren Ende der Fensterscheibe 5 an dieser befestigt. Die hintere Führung 13, 14 nimmt ebenso wie die benachbarte Führung 8, 9 des Korpusses 3 Kräfte sowohl in Fahrzeuglängsrichtung als auch quer zur Fahrzeuglängsrichtung auf. Ebenso nimmt sie Momente um eine sich in Fahrzeuglängsrichtung erstreckende Achse und um eine sich quer zur Fahrzeuglängsrichtung erstreckende Achse auf. Am vorderen Ende der Fensterscheibe 5 trägt diese an einer vorderen Rollenhalterung 16 zwei mit senkrechtem Abstand voneinander angeordnete vordere Führungsrollen 17. Diese laufen in einer vorderen Führungsschiene 18, die in dem Korpus 3 angeordnet ist und einen etwa U-förmigen Querschnitt aufweist. Die vorderen Führungsrollen 17 stützen sich an den Innenseiten der U-Schenkel der vorderen Führungsschiene 18 ab. Die vordere Führung 17, 18 nimmt demgemäß sowohl Kräfte quer zur Fahrzeuglängsrichtung als auch Momente um eine sich in Fahrzeuglängsrichtung erstreckende Achse auf. Die Fenster scheibe 5 wird folglich anders als der Korpus 3 an beiden Enden gegen seitliches Kippen gehalten.

Bei dem dargestellten Ausführungsbeispiel sind sowohl der Türgriff 6, über den die Verschiebekräfte in den Korpus 3 eingeleitet werden, als auch die Führungsschienen 8, 13 mit Winkelflanken am hinteren Türende angeordnet. In Abweichung von diesem Ausführungsbeispiel kann diese Anordnung auch an dem vorderen Türende vorgesehen sein.

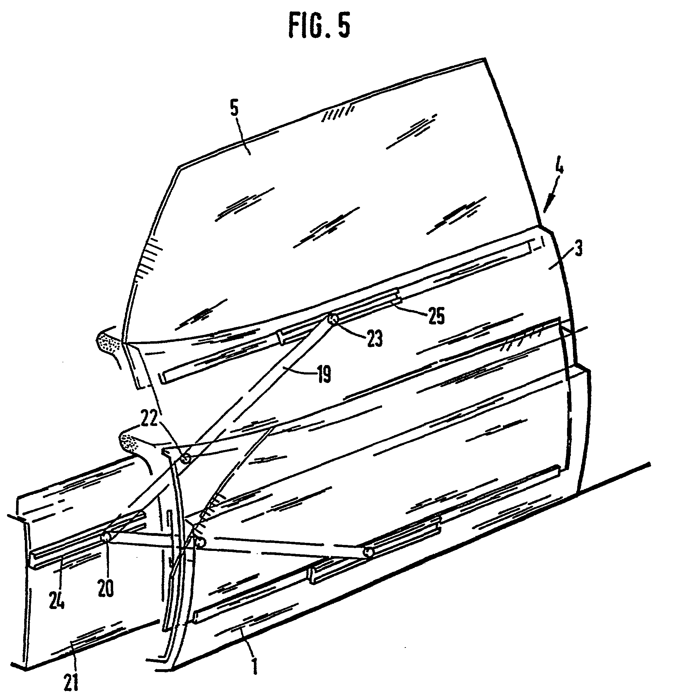

Bei dem Ausführungsbeispiel nach Fig. 5 ist ein Koppelhebel 19 vorgesehen, der über eine erste Lagerung 20 mit dem feststehenden Fahrzeugaugbau 21, über eine zweite Lagerung 22 mit dem Korpus 3 und über eine dritte Lagerung 23 mit der Fensterscheibe 5 verbunden ist. Die zweite Lagerung 22 an dem Korpus 3 ist als Schwenklagerung ausgebildet. Die erste Lagerung 20 an dem feststehenden Fahrzeugaufbau 21 ist als Kulissenführung mit einer an dem feststehenden Fahrzeugaufbau 21 vorgesehenen Kulisse 24 ausgebildet. Die dritte Lagerung 23 an der Fensterscheibe 5 ist ebenfalls als Kulissenführung mit an der Fensterscheibe 5 angeordneter Kulisse 25 ausgebildet. Die Kulissen 24, 25 sind parallel zueinander angeordnet und erstrecken sich in Fahrzeuglängsrichtung. Die zweite Lagerungs 22 an dem Korpus 3 ist nahe des vorderen Endes der Schiebetür 4 angeordnet. Der Koppelhebel 19 ragt dementsprechend über das vordere Ende der Schiebebür 4 hinaus. Die Entfernung der dritten Lagerung 23 von der zweiten Lagerung 22 ist etwa doppelt so groß wie die Entfernung der ersten Lagerung 20 von der zweiten Lagerung 22. Das Verhältnis der beiden Hebelarme des gerade ausgebildeten doppelarmigen Koppelhebels 19 entspricht den Hubbewegungen des Korpusses 3 und der Fensterscheibe 5.

Zum Öffnen der Schiebetür 4 wird der Korpus 3 nach einem Entriegeln des Türschlosses nach unten in den Aufnahmeraum 2 des Längsträgers 1 geschoben. Dabei wird gleichzeitig über die Zwangskopplung, die durch den Koppelhebel 19 bewirkt ist, die Fensterscheibe 5 nach unten in den Korpus 3 geschoben. In der untersten Stellung des Korpusses 3 ist die Fensterscheibe 5 in diesen völlig versenkt. In Fig. 5 sind die beiden Extremstellungen des Korpusses 3 und der Fensterscheibe 5 dargestellt.

Das Schließen der Schiebetür 4 erfolgt durch Anheben des Korpusses 3, wobei sich die Fensterscheibe 5 vermittels der Zwangskopplung aus dem Korpus 3 nach oben schiebt.

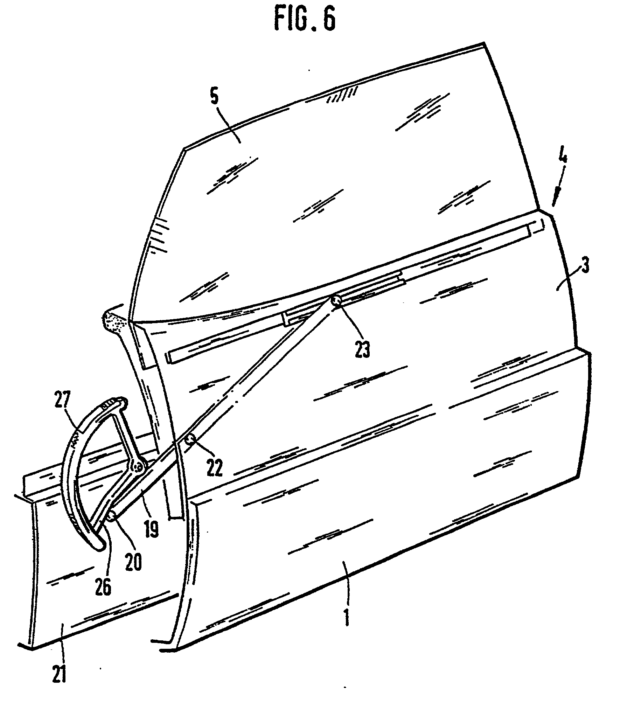

Bei dem Ausführungsbeispiel nach Fig. 6 ist die Möglichkeit vorgesehen, das Fenster zu öffnen und zu schließen, ohne daß der Korpus 3 seine oberste Stellung, die Schließstellung, verläßt. Hierzu ist an dem feststehenden Fahrzeugaufbau 21 statt der Kulissenführung ein bewegbarer Anschlag 26 für die erste Lagerung 20 vorgesehen. Der bewegbare Anschlag 26 bildet eine Abstützbahn, an der sich das aufbauseitige Ende des Koppelhebels 19 mit einem Gleitstein oder einer Führungsrolle abstützt. Der bewegbare Anschlag 26 ist mit einem kreisbogenförmigen Zahnsegment 27 verbunden, über das er verstellt werden kann. Bei in der Schließstellung befindlichem Korpus 3 wirkt der bewegbare Anschlag 26 über den Koppelhebel 19 als Fensterheber.

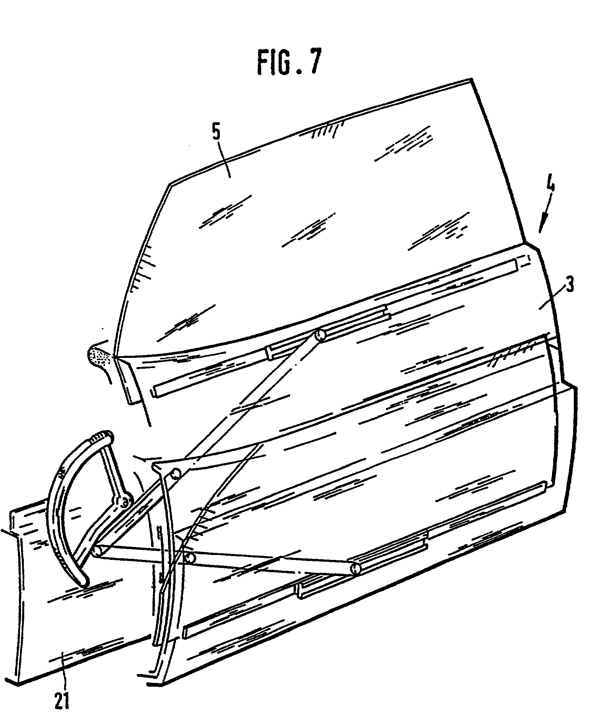

Wird über das Zahnsegment 27 entweder von Hand oder elektromotorisch der bewegbare Anschlag 26 angehoben, folgt das entsprechend federbelastete aufbauseitige Ende des Koppelhebels 19 dieser Aufwärtsbewegung. Da die zweite Lagerung an dem Korpus 3 eine feste Lage einnimmt, senkt sich die Fensterschiebe 5 in den Korpus 3. Auf diese Weise kann das Fenster völlig geöffnet werden. Das Schließen des Fensters erfolgt durch die umgekehrten Bewegungsabläufe. Fig. 7 zeigt die beiden Extremstellungen.

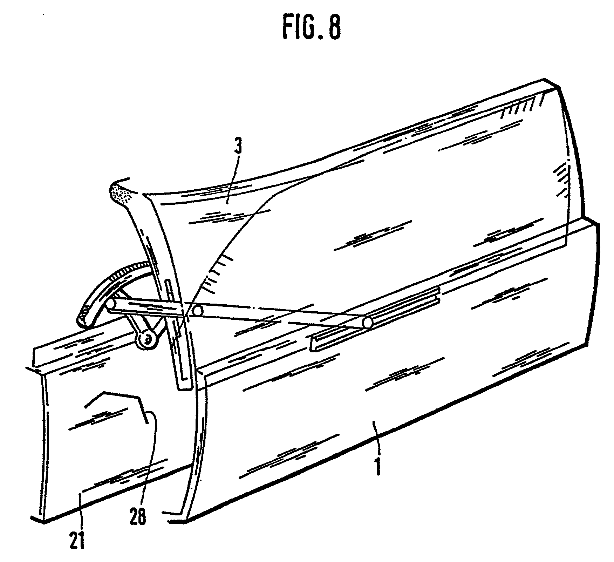

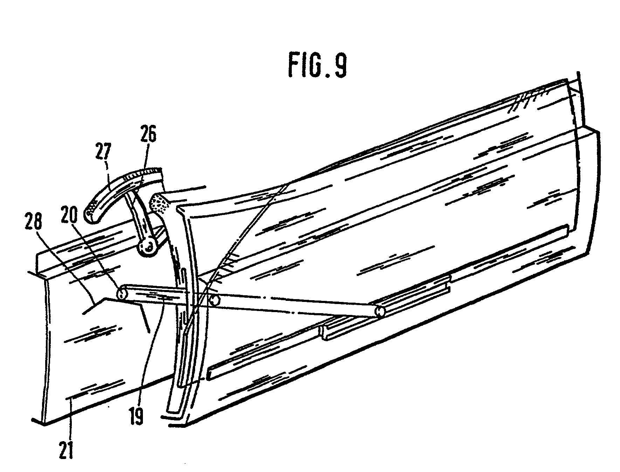

Wird bei teilweise geöffnetem Fenster der Korpus 3 nach unten bewegt, bleibt zunächst das aufbauseitige Ende des Koppelhebels 19 in Anlage an dem Anschlag 26. Die Fensterscheibe 5 senkt sich infolgedessen bei der Abwärtsbewegung des Korpusses 3 weiter in diesen hinein. Ist die Fensterscheibe 5 bei völlig angehobenem Korpus 3 vollständig in diesen abgesenkt, also das Fenster völlig geöffnet (Fig. 8), oder die Fensterscheibe 5 erst nach einer gewissen Verschiebung des Korpusses 3 nach unten völlig in diesen abgesenkt, löst sich bei weiterer Abwärtsbewegung des Korpuses 3 das Ende des Koppelhebels 19 von dem Anschlag 26 und bewegt sich mit dem Korpus 3 nach unten. Ein fester Anschlag 28 an dem feststehenden Fahrzeugaufbau 21 gewährleistet, daß die Fensterscheibe 5 bei abgesenktem Korpus 3 in diesem verbleibt (Fig. 9).

Bei einem Schließen der Schiebetür 4 bewegt sich der Korpus 3 mit der Fensterscheibe 5 und dem Koppelhebel 19 nach oben bis das Ende des Koppelhebels 19 an dem bewegbaren Anschlag 26 anliegt. Bei weiterer Aufwärtsbewegung des Korpusses 3 schiebt sich die Fensterschiebe 5 aus diesem nach oben. Sobald der Korpus 3 seine oberste Stellung erreicht hat, in der er am feststehenden Fahrzeugaufbau verriegelt wird, hat die Fensterscheibe 5 die zuvor eingestellte Stellung wieder eingenommen. Sie kann nunmehr wieder beliebig verstellt werden.

Mit dem bewegbaren Anschlag 26 wird erreicht, daß das Fenster bei geschlossener Schiebetür 4 beliebig geöffnet und geschlossen werden kann. Jede Zwischenposition ist möglich. Trotzdem ist gewährleistet, daß beim Öffnen der Schiebetür 4 die Fensterscheibe 5 stets in dem abgesenk ten Korpus 3 versenkt ist, so daß Ein- und Ausstieg nicht behindert sind. Außerdem wird erreicht, daß nach einem Schließen der Tür das Fenster die zuvor eingestellte Position wieder einnimmt.

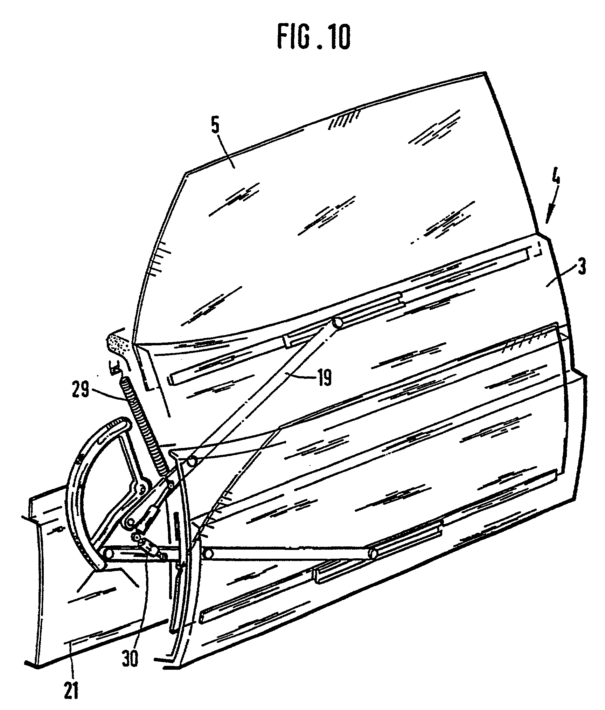

Bei dem Ausführungsbeispiel nach Fig. 10 ist vorgesehen, daß an dem Koppelhebel 19 an dem aus der Schiebetür 4 herausragenden Hebelarm eine Gewichtsausgleichsfeder 29 mit einem ihrer Enden angreift, die als Zugfeder ausgebildet und mit ihrem anderen Ende an dem feststehenden Fahrzeugaufbau 21 verankert ist. Die Gewichtsausglichsfeder 29 bewirkt gleichzeitig ein Anpressen des aufbauseitigen Endes des Koppelhebels 19 an dem bewegbaren Anschlag 26.

An dem Koppelhebel 19 greift an dem aus dem Korpus 3 herausragenden Hebelarm eine zweite Feder 30 mit einem ihrer Enden an, die als Gasfeder ausgebildet ist und mit ihrem anderen Ende ebenfalls an dem feststehenden Fahrzeugaufbau 21 angelenkt ist. Die zweite Feder 30 wirkt als Übertotpunktfeder. Bei geöffneter Schiebetür 4 bewirkt sie gemeinsam mit dem Türgewicht ein Offenhalten. Beim Schließen der Schiebetür 4 wirkt sie von einer mittleren Stellung an entgegen dem Türgewicht für das Schließen unterstützend. In Fig. 10 sind die beiden Extremstellungen dargestellt.

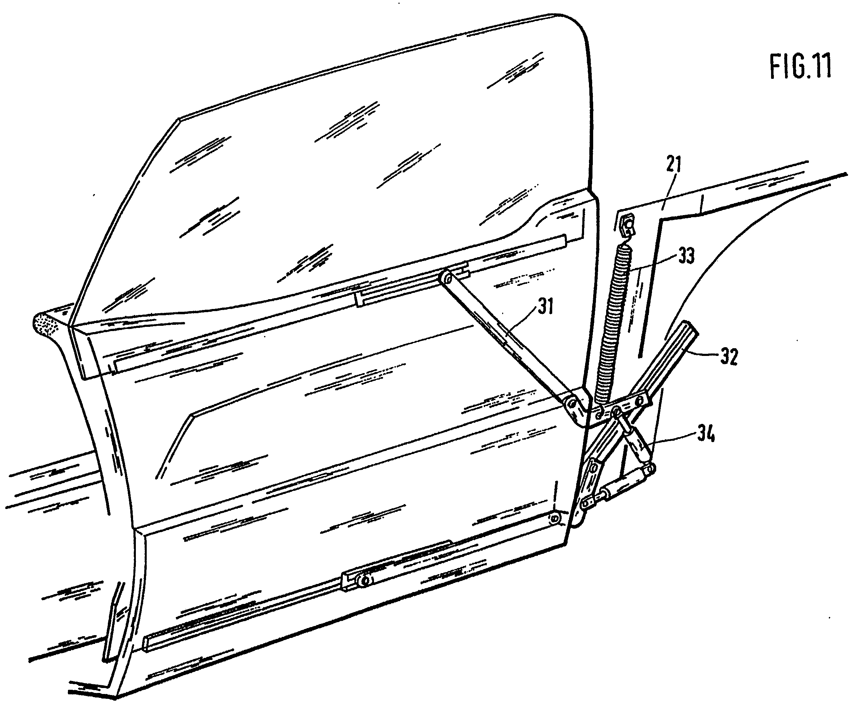

Das Ausführungsbeispiel nach Fig. 11 verdeutlicht, daß der Koppelhebel statt am vorderen Türende am hinteren Türende über diese hinausragen kann. Bei diesem Ausführungsbeispiel ist jedoch nicht ein gerader, sondern ein abgewinkelter Koppelhebel 31 vorgesehen. An dem feststehenden Fahrzeugaufbau 21 ist demgemäß eine geneigt angeordnete Kulisse 32 als Schiebeführung vorgesehen. Auch an dem abgewinkelten Koppelhebel 31 greifen eine Gewichtsausgleichsfeder 33 und eine als Übertotpunktfeder wirkende zweite Feder 34 an.

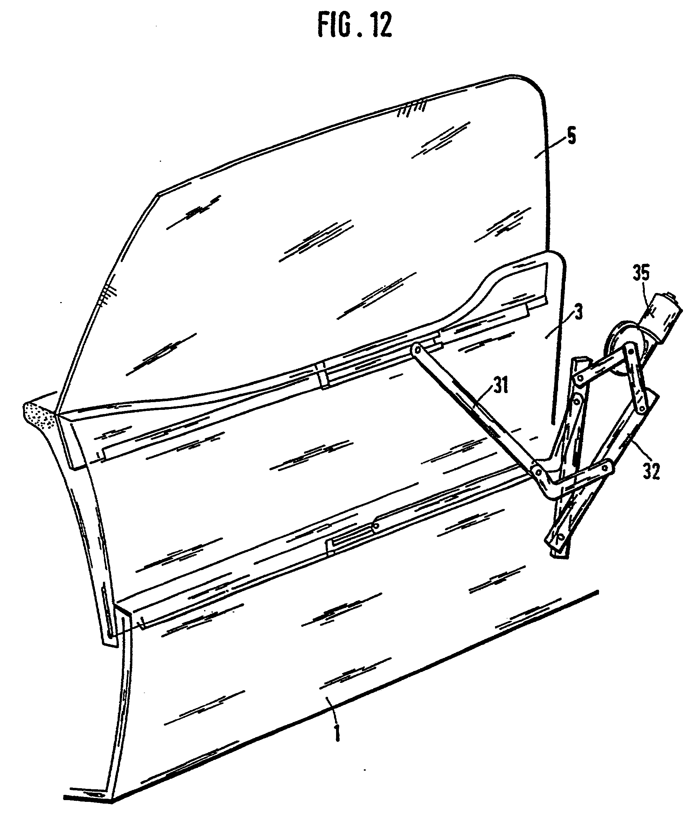

Das Ausführungsbeispiel nach Fig. 12 unterscheidet sich von dem nach Fig. 11 dadurch, daß die Kulisse 32 an dem feststehenden Fahrzeugaufbau 21 bewegbar gelagert ist. Sie kann aus der geneigten Stellung, die in Fig. 11 gezeigt ist, um eine quer zur Fahrzeuglängsrichtung verlaufende Achse in eine Stellung verschwenkt werden, in der sie mit der Führungsschiene 8 des Korpusses 3 parallel angeordnet ist. Die Verstellung der Kulisse 32 bewirkt bei in der Schließstellung befindlichem Korpus 3 und damit fixierter zweiter Lagerung 22 ebenso wie der bewegbare Anschlag 26 nach Fig. 6 bis 10 ein Öffnen bzw. Schließen des Fensters. Die Verstellung der Kulisse 32 kann durch einen Fensterhebermotor 35 oder in Abweichung von dem dargestellten Ausführungsbeispiel von Hand erfolgen. In Fig. 12 sind wiederum die beiden Extremstellungen gezeigt. Das Verstellgetriebe kann derart ausgelegt sein, daß die Achse, um welche die Kulisse 32 an dem feststehenden Fahrzeugaufbau schwenkbar gelagert ist mit der Schwenkachse der Lagerung, mit welcher der Koppelhebel 31 an der Kulisse 32 angreift, deckungsgleich ist, wenn die Tür sich in der unteren Endstellung befindet, also völlig geöffnet ist. Bei einer derartigen Auslegung kann eine Position der Fensterscheibe, die für die gechlossene Tür gewünscht wird, bei geöffneter Tür vorab durch Verschwenken der Kulisse 32 eingestellt werden, ohne daß die Fensterscheibe 5 aus ihrer unteren Stellung angehoben wird. Bei einem anschließenden Schließen der Tür wird die Fensterscheibe nur so weit nach oben geschoben, wie es der Schwenkstellung der Kulisse 32 entspricht.

Statt der dargestellten Ausführungsbeispiele können auch kinematische Entsprechungen eingesetzt werden. Auch ist es möglich, einen motorischen, vorzugsweise elektromotorischen, Antrieb für die Schiebetür vorzusehen.

Bezugszeichenliste

1 Längsträger (Türschweller)
2 Aufnahmeraum
3 Korpus
4 Schiebetür
5 Fensterscheibe
6 Türgriff
7 Fahrzeugseitenwand, links hinten
8 Führungsschiene
9 Führungsrolle
10 Karosseriepfosten (A-Säule), links
11 Fahrzeugseitenwand, vorne links
12 Führungsschiene
13 Führungsschiene
14 Führungsrollen
15 Rollenhalterung
16 Rollenhalterung, vordere
17 Führungsrollen, vordere
18 Führungsschiene, vordere
19 Koppelhebel
20 erste Lagerung
21 feststehender Fahrzeugaufbau
22 zweite Lagerung
23 dritte Lagerung
24 Kulisse
25 Kulisse
26 bewegbarer Anschlag
27 Zahnsegment
28 fester Anschlag
29 Gewichtsausgleichsfeder
30 zweite Feder
31 abgewinkelter Koppelhebel
32 Kulisse
33 Gewichtsausgleichsfeder
34 zweite Feder
35 Fensterhebermotor

## Patentansprüche

1. Schiebetür für Kraftfahrzeuge, insbesondere Personenkraftwagen, mit einem Korpus, der eine in ihn versenkbare Fensterscheibe trägt, bei geschlossener Tür eine im wesentlichen senkrechte Stellung einnimmt, zum Öffnen der Tür in den Fahrzeugkörper versenkbar ist und in der Versenkstellung die Fensterscheibe in deren Versenkstellung aufnimmt, dadurch gekennzeichnet, daß der Korpus (3) in der Versenkstellung eine im wesentlichen senkrechte Stellung einnimmt.

2. Schiebetür nach Anspruch 1, mit an dem Korpus (3) an seinen beiden Enden angeordneten Führungsrollen, die in Führungsschienen (8, 12) eingreifen, die an dem Fahrzeugaufbau angeordnet sind, dadurch gekennzeichnet, daß die Führung (8, 9) an einem Ende des Korpusses (3) derart ausgebildet ist, daß sie sowohl quer zur Führungsrichtung gerichtete Kräfte als auch Momente um quer zur Führungsrichtung gerichtete Achsen aufnehmen kann, und die Führung (12) an dem anderen Ende des Korpusses (3) derart ausgebildet ist, daß die quer zur Tür gerichtete Kräfte aufnehmen kann.

3. Schiebetür nach Anspruch 1 oder 2, dadurch gekennzeichnet, daß an der Fensterscheibe (5) an ihren beiden Enden Führungsrollen (14, 17) angeordnet sind, die in Führungsschienen (13, 18) eingreifen, die an dem Korpus (3) angeordnet sind.

4. Seitentür nach Anspruch 3, dadurch gekennzeichnet, daß die Führung (13, 14) an einem Ende der Fensterscheibe (5) derart ausgebildet ist, daß sie sowohl quer zur Führungsrichtung gerichtete Kräfte als auch Momente um quer zur Führungsrichtung gerichete Achsen aufnehmen kann, und die Führung (17, 18) an dem anderen Ende der Fensterscheibe (5) derart ausgebildet ist, daß sie quer zur Tür gerichtete Kräfte aufnehmen kann.

5. Seitentür nach Anspruch 4, dadurch gekennzeichnet, daß die Führung (17, 18) an dem anderen Ende der Fensterscheibe (5) derart ausgebildet ist, daß sie Momente um die in Richtung der Fensterscheibe (5) verlaufende waagerechte Achse aufnehmen kann.

6. Seitentür nach einem der Ansprüche 4 oder 5, dadurch gekennzeichnet, daß die Führungen (8, 9; 13, 14) für den Korpus (3) und die Fensterscheibe (5), die Bewegungen nur in Führungsrichtung zulassen, einander benachbart an einem Ende der Tür angeordnet sind.

7. Seitentür nach Anspruch 6, dadurch gekennzeichnet, daß die Bewegungen nur in Führungsrichtung zulassende Führung (13, 14) der Fensterscheibe (5) weiter innen als die Bewegungen nur in Führungsrichtung zulassende Führung (8, 9) des Korpusses (3) angeordnet ist.

8. Seitentür nach einem der Ansprüche 1 bis 7, dadurch gekennzeichnet, daß an dem oberen Rand des Korpusses (3) ein Türgriff (6) angeordnet ist.

9. Seitentür nach Anspruch 8, dadurch gekennzeichnet, daß der Türgriff (6) an einem Ende des Korpusses (3) angeordnet ist.

10. Seitentür nach Anspruch 9, dadurch gekennzeichnet, daß der Türgriff (6) an dem Ende des Korpusses (3) angeordnet ist, an dem die Bewegungen nur in Führungsrichtung zulassende Führung (8, 9) des Korpusses (3) angeordnet ist.

11. Seitentür nach einem der Ansprüche 1 bis 10, dadurch gekennzeichnet, daß zwischen Korpus (3) und Fensterscheibe (5) eine Kopplung vorgesehen ist, die derart ausgebildet ist, daß eine Verstellbewegung der Fensterscheibe (5) gegenüber dem Korpus (3) gleichzeitig mit einer gleichsinnigen Verstellbewegung des Korpusses (3) gegenüber dem Fahrzeugaufbau (1, 21) erfolgen kann.

12. Seitentür nach Anspruch 11, dadurch gekennzeichnet, daß ein Koppelhebel (19, 31) mit je einer Lagerung (20, 22, 23) an dem Fahrzeugaufbau (21), an dem Korpus (3) und an der Fensterscheibe (5) vorgesehen ist.

13. Seitentür nach Anspruch 12, dadurch gekennzeichnet, daß die Lagerung (23) des Koppelhebels (19, 31) an der Fensterscheibe (5) als Kulissenführung ausgebildet ist.

14. Seitentür nach Anspruch 13, dadurch gekennzeichnet, daß die Kulisse (25) der Kulissenführung an dem unteren Rand der Fensterscheibe (5) angeordnet ist.

15. Seitentür nach Anspruch 14, dadurch gekennzeichnet, daß die Kulisse (25) an der Außenseite der Fensterscheibe (5) angeordnet ist.

16. Seitentür nach einem der Ansprüche 12 bis 15, dadurch gekennzeichnet, daß die Lagerung (20) des Koppelhebels (19, 31) an dem Fahrzeugaufbau (21) als Kulissenführung ausgebildet ist.

17. Seitentür nach Anspruch 16, dadurch gekennzeichnet, daß die Kulisse (24, 32) der Kulissenführung an dem Fahrzeugaufbau (21) angeordnet ist.

18. Seitentür nach Anspruch 17, dadurch gekennzeichnet, daß die Kulisse (32) bewegbar an dem Fahrzeugaufbau (21) angeordnet ist.

19. Seitentür nach einem der Ansprüche 12 bis 15, dadurch gekennzeichnet, daß die Lagerung (20) des Koppelhebels (19) an dem Fahrzeugaufbau (21) mittels Anschlägen (26, 28) gebildet ist, von denen einer verstellbar ausgebildet ist.

20. Seitentür nach einem der Ansprüche 1 bis 19, dadurch gekennzeichnet, daß eine Gewichtsausgleichsfeder (29, 33) vorgesehen ist.

21. Seitentür nach Anspruch 20, dadurch gekennzeichnet, daß die Gewichtsausgleichsfeder (29, 33) an den Koppelhebel (19, 31) angeschlossen ist.

22. Seitentür nach einem der Ansprüche 1 bis 21, dadurch gekennzeichnet, daß eine übertotpunktfeder (30, 34) vorgesehen ist, welche die Seitentür (4) unterhalb einer mittleren Stellung nach unten und oberhalb der mittleren Stellung nach oben beaufschlagt.

23. Seitentür nach Anspruch 22, dadurch gekennzeichnet, daß die Übertotpunktfeder (30, 34) an den Koppelhebel (19, 31) angeschlossen ist.

## Revendications

1. Porte latérale, réalisée sous la forme d'une porte coulissante, pour des voitures particulières, avec un corps portant une glace de fenêtre susceptible de s'escamoter à l'intérieur de ce corps, qui lorsque la porte est fermée, prend une position essentiellement verticale et est susceptible de s'escamoter dans la structure du véhicule pour l'ouverture de la porte et qui, dans cette position escamotée, reçoit la glace de la fenêtre dans la position escamotée de celle-ci, porte latérale caractérisée en ce que le corps (3) est susceptible d'être escamoté dans le longeron latéral (1) correspondant en prenant, lorsqu'il est ainsi escamote, une position essentiellement verticale.

2. Porte latérale selon la revendication 1, avec des galets de guidage disposés aux deux extrémites du corps (3), ces galets venant en prise dans des rails de guidage (12) disposés sur la carrosserie du véhicule, porte latérale caractérisée en ce que le guidage (8, 9) est réalisé de façon telle à une extrémite du corps (3) qu'il puisse absorber aussi bien des efforts orientés transversalement par rapport à la direction de guidage, que des couples autour d'axes orientés transversalement par rapport à la direction de guidage, et le guidage (12) à l'autre extrémité du corps (3) est réalisé de façon qu'il puisse absorber des efforts dirigés transversalement par rapport à la porte.

3. Porte latérale selon la revendication 1 ou 2, caractérisée en ce que des galets de guidage (14, 17) sont disposés aux deux extrémités de la glace (5) de la fenêtre, ces galets venant en prise dans des rails de guidage (13, 18) qui sont disposés sur le corps (3).

4. Porte latérale selon la revendication 3, caractérisée en ce que le guidage (13, 14) à une extrémité de la glace (5) de la fenêtre est réalisé façon qu'il puisse absorber aussi bien des efforts orientés transversalement par rapport à la direction de guidage que des couples autour d'axes orientés transversalement par rapport à la direction de guidage, et le guidage (17, 18) à l'autre extrémité de la glace (5) de la fenêtre est réalisé de façon qu'il puisse absorber des efforts orientés transversalement la porte.

5. Porte latérale selon la revendication 4, caractérisée en ce que le guidage (17, 18) à l'autre extrémité de la glace (5) de la fenêtre est réalisé de façon qu'il puisse absorber des couples autour d'axes horizontaux s'étendant en direction de la glace (5) de la fenêtre.

6. Porte latérale selon une des revendications 4 ou 5, caractérisée en ce que les guidages (8, 9; 13, 14 ) pour le corps (3) et pour la glace (5) de la fenêtre, guidages qui n'autorisent des déplacements que dans la direction de guidage, sont disposés au voisinage l'un de l'autre, à une extrémité de la porte.

7. Porte latérale selon la revendication 6, caractérisée en ce que le guidage (13, 14) de la glace (5) de la fenêtre, qui n'autorise le déplacement qu'en direction du guidage, est disposé plus à l'intérieur que le guidage (8, 9) du corps (3) n'autorisant le déplacement que dans la direction de guidage.

8. Porte latérale selon une des revendications 1 à 7, caractérisée en ce qu'une poignée de porte (6) est disposée sur le bord supérieur du corps (3).

9. Porte latérale selon la revendication 8, caractérisée en ce que la poignée de porte (6) est disposée à une extrémité du corps (3).

10. Porte latérale selon la revendication 9, caractérisée en ce que la poignée de porte (6) est disposée à l'extrémité du corps (3) à laquelle est disposé le guidage (8, 9), n'autorisant les déplacements qu'en direction du guidage, du corps (3).

11. Porte latérale selon une des revendications 1 à 10, caractérisée en ce qu'entre le corps (3) et la glace (5) de la fenêtre, il est prévu un couplage qui est réalisé de façon qu'un déplacement de la glace (5) de la fenêtre par rapport au corps (3) puisse s'effectuer simultanément avec un déplacement de même sens du corps (3) par rapport à la carrosserie (1, 21) du véhicule.

12. Porte latérale selon la revendication 11, caractérisée en ce qu'il est prévu un levier de couplage (19, 31) avec respectivement un montage (20, 22, 23) sur la carrosserie (21) du véhicule, sur le corps (3), et sur la glace (5) de la fenêtre.

13. Porte latérale selon la revendication 12, caractérisée en ce que le montage (23) du levier de couplage (19, 31) sur la glace (5) de la fenêtre revêt la forme d'un guidage par coulisse.

14. Porte latérale selon la revendication 13, caractérisée en ce que la coulisse (25) du guidage par coulisse est disposée sur le bord inférieur de la glace (5) de la fenêtre.

15. Porte latérale selon la revendication 14, caractérisée en ce que la coulisse (25) est disposée sur la face externe de la glace (5) de la fenêtre.

16. Porte latérale selon une des revendications 12 à 15, caractérisée en ce que le montage (20) du levier de couplage (19, 31) sur la carrosserie (21) du véhicule, revêt la forme d'un guidage par coulisse.

17. Porte latérale selon la revendication 16, caractérisée en ce que la coulisse (24, 32) du guidage par coulisse est disposée sur la carrosserie (21) du véhicule.

18. Porte latérale selon la revendication 17, caractérisée en ce que la coulisse (32) est disposée sur la carrosserie (21) du véhicule, de façon a pouvoir être déplacée.

19. Porte latérale selon une des revendications 12 à 15, caractérisée en ce que le montage (20) du levier de couplage (19) sur la carrosserie (21) du véhicule, est constitué par des butées (26, 28) dont l'une est réglable.

20. Porte latérale selon une des revendications 1 à 19, caractérisée en ce qu'il est prévu un ressort de compensation du poids (29, 33).

21. Porte latérale selon la revendication 20, caractérisée en ce que le ressort de compensation du poids (29, 33) est raccordé au levier de couplage (19, 31).

22. Porte latérale selon une des revendication 1 à 21, caractérisée en ce qu'il est prévu un ressort (30, 34) de dépassement du point mort, qui sollicite la porte latérale (4) vers le bas au-dessous d'une position médiane et vers le haut au-dessus de cette position médiane.

23. Porte latérale selon la revendication 22, caractérisée en ce que le ressort de dépassement du point mort (30, 34) est raccordé au levier de couplage (19, 31).

## Claims

1. A sliding side door for passenger cars comprising a body which carries a window-pane lowerable inside it and which occupies a substantially vertical position when the door is closed, is lowerable into the car body to open the door and, in the lowered position, receives the window-pane in the lowered position thereof, characterised in that the body (3) is lowerable into the associated side longitudinal bearer (1) and, in the lowered position, occupies a substantially vertical position.

2. A side door according to claim 1, comprising guide pulleys disposed at both ends of the body (3) and engaging in guide rails (12) disposed on the car body, characterised in that the guide (8, 9) is formed on one end of the body (3) so that it can take up forces extending transversely to the guide direction and torques around axes transversely to the guide direction, and the guide (12) on the other end of the body (3) is designed so that it can take up forces directed transversely to the door.

3. A side door according to claim 1 or 2, characterised in that guide pulleys (14, 17) are disposed at both ends of the window pane (5) and engage in guide rails (13, 18) disposed on the body (3).

4. A side door according to claim 3, characterised in that the guide (13, 14) is formed at one end of the window pane (5) so that it can take up forces directed transversely to the guide direction and also torques around axes directed transversely to the guide direction, and the guide (17, 18) at the other end of the window pane (5) is constructed so that it can take up forces directed transversely to the door

5. A side door according to claim 4, characterised in that the guide (17, 18) at the other end of the window pane (5) is constructed so that it can take up torques around the horizontal axis extending in the direction of the window pane (5).

6. A side door according to claim 4 or 5, characterised in that the guides (8, 9, 13, 14) for the body (3) and the window pane (5) which allow movements only in the guide direction are disposed near one another at one end of the door.

7. A side door according to claim 6, characterised in that the guide (13, 14) of the window pane (5), which allows movement only in the guide direction, is disposed further inward than the guide (8, 9) of the body (3) which allows movement only in the guide direction.

8. A side door according to any of claims 1 to 7, characterised in that a door handle ( 6) is disposed at the top edge of the body (3).

9. A side door according to claim 8, characterised in that the door handle (6) is disposed at one end of the body (3).

10. A side door according to claim 9, characterised in that the door handle (6) is disposed at the end of the body (3) at which the guide (8, 9) of the body (3) allowing movement only in the guide direction is disposed.

11. A side door according to any of claims 1 to 10, characterised in that a coupling is provided between the body (3) and the window pane (5) and is constructed so that the window pane (5) can be adjusted relative to the body (3) simultaneously with an adjustment in the same direction of the body (3) relative to the car body (1, 21).

12. A side door according to claim 11, characterised in that a coupling lever (19, 31) is provided with a bearing (20, 22, 23) on the car body (21), on the body (3) and on the window pane (5) respectively.

13. A side door according to claim 12, characterised in that the bearing (23) of the coupling lever (19, 31) on the window pane (5) is a connecting link guide.

14. A side door according to claim 13, characterised in that the link (25) of the sliding link guide is disposed on the bottom edge of the window pane (5).

15. A side door according to claim 14, characterised in that the link (25) is disposed on the outer side of the window pane (5).

16. A side door according to any of claims 12 to 15, characterised in that the bearing (20) of the coupling lever (19, 31) is in the form of a sliding link guide on the car body (21).

17. A side door according to claim 16, characterised in that the link (24, 32) of the sliding link guide is disposed on the car body (21).

18. A side door according to claim 17, characterised in that the link (32) is movably mounted on the car body (21).

19. A side door according to any of claims 12 to 15, characterised in that the bearing (20) of the coupling lever (19) is in the form of abutments (26, 28) on the car body (21), one abutment being adjustable.

20. A side door according to any of claims 1 to 19, characterised in that a weight-compensating spring (29, 33) is provided.

21. A side door according to claim 20, characterised in that the weight-compensating spring (29, 31) is connected to the coupling lever (19, 31).

22. A side door according to any of claims 1 to 21, characterised in that a past-dead-centre spring (30, 34) is provided and urges the side door (4) downwards below a central position and upwards above the central position.

23. A side door according to claim 22, characterised in that the past-dead-centre spring (30, 34) is connected to the coupling lever (19, 31).

# FIG. 1

# FIG. 2

# FIG. 4

# FIG. 3

# FIG. 5

# FIG. 6

EP 0 257 350 B1

# FIG . 7

# FIG. 8

# FIG.9

# FIG . 10

FIG.11

EP 0 257 350 B1

# FIG . 12